# FASCICULE DE BREVET EUROPEEN

(11) **EP 2 449 727 B1**
(45) Date de publication et mention de la délivrance du brevet: **02.12.2020**
(21) Numéro de dépôt: 10745357.3
(22) Date de dépôt: 28.06.2010
(51) Int. Cl.: H04L 12/801, H04L 12/851, H04L 12/70, H04L 12/825, H04L 12/26

(54) **DISPOSITIF DE COMMANDE DE L'OUVERTURE DE SESSIONS, PLATEFORME DE SERVICE AVEC UN TEL DISPOSITIF, PROCÉDÉ, PROGRAMME D'ORDINATEUR ET SUPPORT D'INFORMATION ASSOCIÉS**
VORRICHTUNG ZUR STEUERUNG VON SITZUNGSERÖFFNUNGEN, DIENSTPLATTFORM MIT EINER DERARTIGEN VORRICHTUNG UND ZUGEHÖRIGES VERFAHREN, COMPUTERSOFTWARE UND DATENMEDIUM
DEVICE FOR CONTROLLING THE OPENING OF SESSIONS, SERVICE PLATFORM WITH SUCH DEVICE, AND RELATED METHOD, COMPUTER SOFTWARE, AND DATA MEDIUM

(30) Priorité: 30.06.2009 FR 0954461
(43) Date de publication de la demande: 09.05.2012
(73) Titulaire: ORANGE, 75015 Paris (FR)
(72) Inventeur: HAMCHAOUI, Isabelle, F-22730 Tregastel (FR); GUILLEMIN, Fabrice, F-22560 Pleumeur Bodou (FR); CADRO, Philippe, F-22700 Louannec (FR)
(74) Mandataire: Regimbeau
(86) Numéro de dépôt international: PCT/FR2010/051342
(87) Numéro de publication internationale: WO 2011/001096

(56) Documents cités:
- EP-A1- 1 235 392
- EP-A1- 1 873 977
- EP-A1- 1 971 087

## Description

L'invention concerne un dispositif de commande de l'ouverture de sessions, une plateforme de service avec un tel dispositif, ainsi qu'un procédé, un programme d'ordinateur et un support d'information associés.

Le document EP-A-1 971 087 concerne un contrôleur de passerelle pour une passerelle échangeant des paquets de données avec une autre passerelle, ce dispositif comportant des moyens de surveillance de la qualité du trafic de données des connexions s'étendant entre la passerelle contrôlée et l'autre passerelle, et des moyens de contrôle de rejet pour provoquer le rejet de nouvelles connexions demandées vers l'autre passerelle lorsque cette qualité baisse sous un niveau prédéterminé.

Le document EP-A-1 235 392 concerne un dispositif, dans lequel un routeur notifie une congestion à un terminal récepteur par un signal ECN, pour que le terminal récepteur cesse temporairement l'émission de données.

L'établissement (ou ouverture) de sessions de service, à travers lesquelles un serveur de données fournit à un client des données pouvant représenter par exemple des sons ou des images, est classiquement piloté par une fonction de contrôle d'admission.

Cette fonction protège le trafic de données des sessions déjà établies au prix du rejet (lorsque cela s'avère nécessaire pour maintenir ce trafic établi) de nouvelles sessions.

Ainsi, la fonction de contrôle d'admission doit s'assurer, pour toute nouvelle demande d'ouverture de session de la part d'un client, que les ressources nécessaires à cette session sont disponibles dans le réseau afin de traiter la demande (c'est-à-dire accepter ou rejeter cette demande) en un temps acceptable pour l'utilisateur (entre environ 1 seconde et 10 secondes).

Cette fonction est relativement simple à mettre en œuvre dans les réseaux opérés en mode connecté grâce à l'échange de signalisation qui précède toute ouverture de session et permet de vérifier si les ressources nécessaires sont disponibles.

Tel n'est pas le cas en revanche dans les réseaux dont la conception de base ne repose pas sur une opération en mode connecté, tels que les réseaux de paquets dans lesquels les paquets de données sont adressés aux destinataires sans aucune signalisation réseau préalable et dans lesquels les surcharges du réseau sont gérées au moyen de files d'attente, qui sont toutefois sources de congestion éventuelles.

Les fonctions de contrôle d'admission mises en œuvre à ce jour dans de tels réseaux ont recours à un partitionnement des ressources, c'est-à-dire à la création d'un sous-réseau dédié au service concerné dans le but d'assurer que le sous-réseau dispose des ressources nécessaires.

Ce partitionnement est toutefois préjudiciable puisqu'il interdit toute mutualisation des ressources entre services et conduit donc à dimensionner le réseau pour accueillir la somme des pics d'activité de chaque service alors que ceux-ci ne sont pas nécessairement concomitants.

Dans ce contexte, l'invention propose un dispositif de commande de l'ouverture de sessions de communications entre un serveur et des terminaux client reliés par un réseau de paquets de données suivant la revendication 1

On utilise par exemple dans ce cadre des techniques de détection existantes, telles que le marquage du champ ECN des paquets IP, comme décrit plus loin.

L'ouverture de la seconde session est ainsi inhibée lors de la constatation d'une congestion effective dans le réseau concerné, ce qui est possible de manière simple, bien que dans le cadre d'un réseau de paquets, grâce à la première session établie.

On dénomme ici *"information de congestion"* une information dont la présence (par exemple dans un paquet de données échangé dans le cadre de la première session) indique l'existence d'une congestion. Comme décrit ci-après, il s'agit par exemple de la valeur 1 de l'information CE (*"Congestion Experienced"*) véhiculée par le champ ECN des paquets IP.

On peut donc prévoir de détecter un champ d'information contenant éventuellement une information de congestion indicative d'une congestion affectant la première session et de commander (c'est-à-dire accepter ou refuser) l'ouverture de la seconde session de communication avec le second terminal client en fonction de la valeur du champ d'information détecté.

Les revendications 2 à 6 concernent des modes de réalisation du dispositif de commande.

L'information de congestion peut être contenue dans un en-tête d'un paquet de données reçu du premier terminal client par le serveur, par exemple dans un message de réponse émis par le premier terminal client vers le serveur, tel qu'un accusé de réception ou un rapport de communication reçu du premier terminal client en réponse aux données délivrées au premier terminal client par le système.

On utilise ainsi des éléments de l'architecture classique du réseau de paquets ce qui permet de profiter des avantages présentés ci-dessus de manière simple et dans le cadre de systèmes existants.

Le dispositif de commande peut comprendre des moyens d'identification d'une zone de congestion à partir d'informations d'identification du premier terminal client (par exemple son adresse IP) contenues dans le paquet de données (et à partir également de connaissances relatives à la topologie et au dimensionnement du réseau) et les moyens d'inhibition peuvent alors être aptes à inhiber une ouverture de session requise par un terminal client situé dans ladite zone identifiée, alors que des sessions pourront être ouvertes avec des terminaux clients situés dans des zones où aucune congestion n'a été localisée.

Le blocage de l'ouverture de nouvelles sessions est ainsi limité à la zone où la congestion a été détectée et les autres zones ne sont donc pas affectées inutilement.

Afin de ne pas bloquer des sessions à haut niveau de priorité du fait de la congestion de niveaux de priorité inférieurs, on peut prévoir que l'information de congestion est relative à une congestion de paquets de données ayant une priorité supérieure ou égale à la priorité de la session établie.

Le dispositif de commande peut faire partie d'une plateforme de commande (qui peut comprendre un serveur de contenus ou gérer à distance, par exemple à travers le réseau déjà mentionné, un ou plusieurs serveurs de contenus, comme décrit ci-après).

Un deuxième objet de l'invention est une plateforme de service de données selon la revendication 8. En variante, le dispositif de commande pourrait être externe à la plateforme de services, par exemple relié à celle-ci par le réseau déjà mentionné.

Un troisième objet de l'invention est un procédé de commande de l'ouverture de sessions de communications entre un serveur et des terminaux clients reliés par un réseau de paquets de données selon la revendication 7.

Dans un mode particulier de réalisation, les différentes étapes du procédé de commande selon l'invention sont déterminées par des instructions de programme d'ordinateur.

Un quatrième objet de l'invention est un produit programme d'ordinateur selon la revendication 9. Le programme d'ordinateur peut être sur un support d'informations, ce programme étant susceptible d'être mis en œuvre dans un équipement nœud ou plus généralement dans un ordinateur, ce programme comportant des instructions adaptées à la mise en œuvre des étapes d'un procédé de commande tel que décrit ci-dessus.

Un cinquième objet de l'invention est un support d'informations apte à coopérer avec un dispositif programmable et contenant des instructions aptes à mettre en œuvre le procédé de commande de l'ouverture de sessions comme décrit ci-dessus lorsqu'elles sont chargées et exécutées par le dispositif programmable.

Les caractéristiques optionnelles présentées ci-dessus à propos du système peuvent également s'appliquer à ce procédé.

D'autres caractéristiques et avantages de l'invention apparaîtront à la lumière de la description qui suit, faite en référence aux dessins annexés dans lesquels :
- la figure 1 représente un premier contexte de mise en œuvre de l'invention ;
- la figure 2 représente un exemple du déroulement du fonctionnement du système de la figure 1 ;
- la figure 3 représente un second contexte possible de mise en œuvre de l'invention ;
- la figure 4 illustre le fonctionnement de l'invention dans un système prévoyant plusieurs qualités de service.

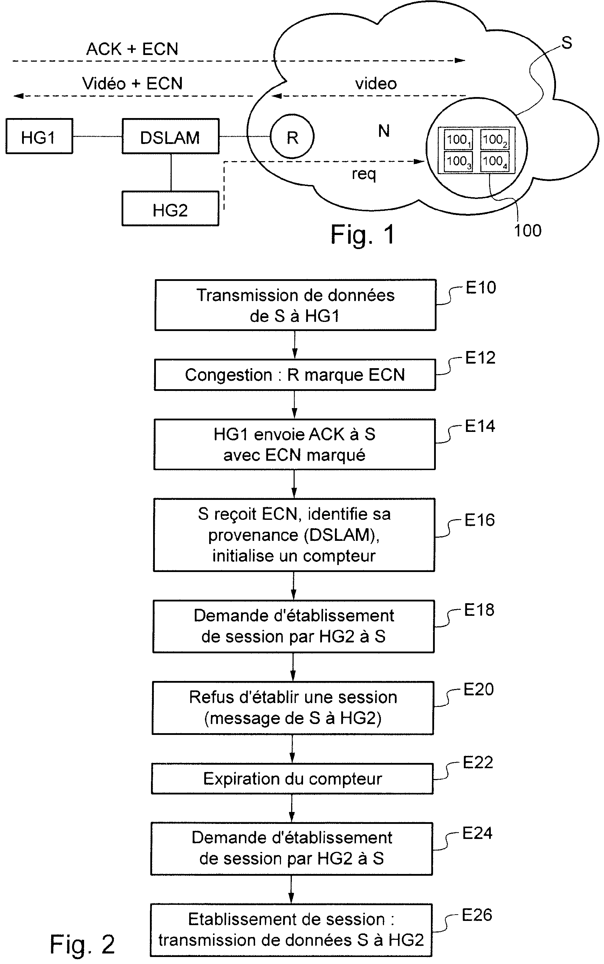

La **figure 1** représente un système de distribution de contenus audiovisuels sur un réseau de protocoles TCP/IP (couramment dénommé *"Web TV").*

Le système représenté à la figure 1 comprend un serveur de contenus S qui assure, dans le présent mode de réalisation, les fonctions d'une plateforme de services et intègre un dispositif de commande 100 selon l'invention. On notera toutefois que le dispositif de commande 100 selon l'invention peut aussi être externe au serveur de contenus S.

Le serveur est apte à délivrer des paquets de données formant un flux vidéo à des terminaux clients (ici des passerelles résidentielles HG1 , HG2 qui forment chacune le point d'entrée à un réseau résidentiel d'un utilisateur, qui peut inclure notamment un terminal de type ordinateur personnel ou PC, ou éventuellement d'autres terminaux, tel qu'un terminal mobile ou un PDA) à travers un réseau de paquets N, un routeur R et un multiplexeur DSLAM situé au niveau d'un répartiteur sur lequel sont connectés les clients HG1 , HG2.

Naturellement, l'invention s'applique à d'autres contextes que celui qui vient d'être décrit. Par exemple, le terminal de type PC pourrait être connecté directement au réseau, sans l'intermédiaire d'une passerelle. De même, la passerelle peut être le point d'entrée d'un réseau d'entreprise (et non nécessairement d'un réseau domestique). L'équipement d'accès peut quant à lui être de tout type (DSLAM pour *"Digital Subscriber Une Access Multiplexor"* comme déjà mentionné, ou en variante MSAN pour *"Multiservice Access Node"* ou routeur direct), dans une technologie ADSL (i.e. *"Asymmetric Digital Subscriber Line"*) ou optique (FTT, i.e. *"Fiber To The Home").*

Le réseau N (notamment le routeur R) est capable de détecter une congestion dans la transmission des données (ici principalement des données qui codent un contenu vidéo, mais il pourrait s'agir de tout type de données) transmises du serveur S à un client (ici HG1) et à insérer dans ce cas une information de congestion dans les paquets de données concernés, typiquement dans un champ d'en-tête de chaque paquet concerné, tel que le champ ECN (pour "*Explicit Congestion Notification*") du protocole IP.

Les terminaux clients émettent, conformément au protocole TCP, des accusés de réception ACK des paquets de données vidéo qu'ils reçoivent par l'intermédiaire de leur passerelle résidentielle HG1, HG2.

On notera que, dans le cadre de l'invention, la communication des paquets de données du serveur au client peut être gérée par d'autres protocoles que le protocole TCP. À titre d'exemple, les protocoles UDP/RTP (pour *"User Datagram Protocol*/*Real Time Transport Protocol"*) peuvent être utilisés, notamment pour des applications de type IPTV. Dans ce cas, les terminaux clients émettent des rapports RTCP (*"RTP Control Protocol"*) dans le sens inverse de la communication et l'information ECN peut-être codée dans l'en-tête des paquets IP qui transportent ces rapports RTCP.

Selon un premier mode de réalisation, le terminal du réseau résidentiel effectue la recopie de l'information de congestion ECN dans le paquet porteur de l'accusé de réception ACK.

Selon un deuxième mode de réalisation, les passerelles HG1, HG2 peuvent être conçues pour recopier l'information de congestion ECN dans l'en-tête du paquet IP porteur de l'accusé de réception ACK.

Le serveur S comprend un module (connecté par exemple directement au réseau N) de détection des informations de congestion ECN dans les paquets IP qu'il reçoit.

Lorsque de telles informations de congestion ECN sont détectées, le dispositif de commande 100 du serveur S selon l'invention localise le lieu de congestion (sur la base des adresses IP du client émetteur du paquet IP porteur de l'accusé de réception ACK marqué d'une information de congestion ECN) et interdit, par exemple pour une durée déterminée à partir de toute nouvelle détection d'une information de congestion ECN et au moyen d'un compteur, toute nouvelle ouverture d'une session entre le serveur S et un client (telle que la passerelle HG2) situé dans la zone où la congestion a été localisée (par exemple connecté au même multiplexeur DSLAM que le client qui a retourné un accusé de réception ACK marqué de l'information de congestion ECN).

On pourrait naturellement prévoir en variante que toute nouvelle ouverture de session soit interdite pendant la période déterminée, quelle que soit la localisation de l'utilisateur demandant l'ouverture d'une nouvelle session. On effectue ainsi un contrôle d'admission de l'ouverture de nouvelles sessions basé sur la constatation d'une congestion effective dans le réseau, sans avoir recours à un protocole de signalisation spécifique ou à un partitionnement des ressources du réseau.

Le dispositif de commande 100 selon l'invention comprend les éléments matériels que l'on retrouve classiquement dans un ordinateur conventionnel ou un routeur spécialisé, à savoir un processeur 100₁, une mémoire vive de type RAM 100₂, une mémoire morte de type ROM 100₃, des moyens de télécommunications 100₄ permettant une connexion au réseau de paquets et l'échange de paquets de données avec les autres dispositifs programmables connectés au réseau.

La mémoire morte 100₃ constitue un support d'enregistrement conforme à l'invention. Ce support mémorise le programme d'ordinateur conforme à l'invention. Ce programme comporte des instructions pour l'exécution des étapes du procédé de commande conforme à l'invention dont un exemple est décrit en référence à la figure 2.

On décrit à présent en référence à la **figure 2** un exemple de déroulement de mise en œuvre du procédé de commande selon l'invention par un dispositif de commande de la plateforme de service de la figure 1.

A l'étape E10, des données (représentant typiquement sous forme de paquets un contenu vidéo) sont transmises du serveur au client HG 1.

Au cours de cette transmission, le routeur R détecte une congestion et marque les en-têtes des paquets transmis d'une information indiquant une congestion (au moyen du champ ECN) à l'étape E12.

Le client HG 1, qui reçoit les données vidéo marquées par l'information de congestion ECN, envoie au serveur S un accusé de réception ACK des données vidéo en marquant le champ d'en-tête ECN du paquet IP porteur de l'accusé de réception ACK afin de signaler la congestion détectée par le routeur R (étape E14).

A l'étape E16, le serveur S (précisément le dispositif de commande 100 situé au sein du serveur S) détecte l'information de congestion ECN dans l'accusé de réception ACK, identifie la provenance de cet accusé de réception au moyen de l'adresse IP qu'il contient et localise ainsi la congestion (ici le lien entre le routeur R et le multiplexeur DSLAM) et déclenche un compteur apte à mesurer la durée déterminée d'inhibition de l'ouverture de nouvelles sessions avec des clients de la zone identifiée.

Si une demande d'établissement (ou d'ouverture) de session générée par un autre client HG2 connecté au multiplexeur DSLAM est émise à destination du serveur S comme indiqué à l'étape E18, le dispositif de commande 100 du serveur S vérifie au moyen du compteur que la durée déterminée n'est pas écoulée et refuse dans ce cas d'établir une session en envoyant au client HG2 un message signalant ce refus (étape E20).

Une fois la durée prédéterminée écoulée, le compteur situé au sein du serveur S vient à expiration (étape E22).

Si aucune nouvelle congestion n'est détectée (comme le suppose la figure 2), une nouvelle demande d'établissement de session par le client HG2 (étape E24) sera suivie de l'établissement de la session demandée et par conséquent de la transmission de paquets de données vidéo du serveur S au client HG2 (étape E26).

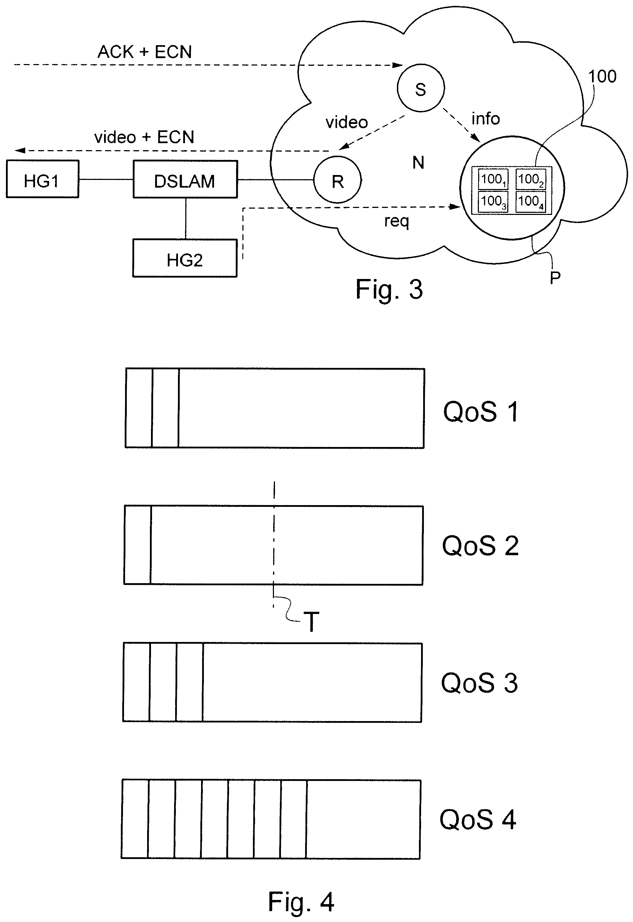

La **figure 3** représente une variante de réalisation du système de la figure 1 et les éléments communs à ces deux figures ne seront donc pas décrits à nouveau.

Dans le système de la figure 3, une plate-forme de service P, qui reçoit les demandes de contenu des clients-utilisateurs (flèche req) est distincte du serveur de contenu S et reliée à celui-ci, par exemple à travers le réseau N.

On remarque que le système de distribution du contenu vidéo pourrait contenir plusieurs serveurs de contenu de type S (typiquement régionaux) émettant des données à destination des clients sous la commande d'une seule plate-forme de service P (typiquement nationale).

Comme en figure 1 , les clients du système (ici la passerelle domestique HG1) reproduisent, dans les paquets IP porteurs de l'accusé de réception ACK qu'ils transmettent à destination du serveur S, les informations de congestion ECN marquées dans l'en-tête des paquets vidéo qu'ils reçoivent.

Le serveur S détecte, dans les paquets IP porteurs des accusés de réception ACK qu'il reçoit, ces informations de congestion ECN indicatives d'une congestion dans le chemin descendant du serveur S vers le client HG 1 et émet dans ce cas une information (flèche info en figure 3) à destination de la plate-forme de service P pour signaler à celle-ci la congestion et la localisation de cette congestion (obtenue par exemple comme déjà mentionné au moyen de l'adresse IP des accusés de réception ACK).

A réception de cette information de congestion et de la localisation de la congestion, le dispositif de commande 100 de la plate-forme de service P inhibe (i.e. interdit) pour une durée prédéterminée l'établissement de nouvelles sessions en réponse aux demandes (flèche req) issues des clients (tels que la passerelle domestique HG2) situés dans la même zone (définie ici par un multiplexeur DSLAM) du réseau : en pratique, la plate-forme émet à destination du client HG2 une réponse indiquant un refus de l'ouverture d'une nouvelle session et ne commande donc pas au serveur S l'envoi des données requises par le client HG2.

On remarque en référence à la **figure 4** que la solution proposée est adaptée aux systèmes dans lesquels sont définies différentes classes de trafic avec priorité de certaines classes sur les autres (typiquement ordonnée de la classe la plus prioritaire QoS1 à la classe moins prioritaire QoS4, où *"QoS"* signifie *"Quality ofService").*

Il est en effet prévu dans ce type de système que les informations de congestion portées par un paquet indiquent une saturation au niveau de la classe du paquet et des classes de priorité supérieure. Ainsi, même si une classe de faible priorité (QoS4 en figure 4) arrive à saturation, cela ne déclenche pas l'introduction d'une information de congestion ECN pour les paquets des classes de priorité supérieures (comme représenté en figure 4, le seuil T relatif aux classes QoS1 et 2 n'étant pas atteint).

Les exemples qui précèdent ne sont que des modes possibles de mise en œuvre de l'invention qui ne s'y limite pas. Notamment, d'autres réseaux que ceux du protocole TCP/IP peuvent être concernés, tels que les réseaux de type ATM ; de même, d'autres informations de congestion peuvent être utilisées, telle que l'information FECN ou BECN (une recopie d'informations par le client n'étant pas nécessaire pour cette dernière) dans le cadre d'un réseau ATM.

## Revendications

1. Dispositif de commande (100) de l'ouverture de sessions de communications entre un serveur (S) et des terminaux clients (HG 1, HG2) reliés par un réseau de paquets de données, **caractérisé en ce que** le dispositif de commande (100) est configuré pour :
détecter, dans un paquet envoyé par un premier terminal client (HG1) au serveur (S), une information de congestion (ECN) d'une première session de communication établie entre le premier terminal client (HG1) et le serveur (S), ladite information de congestion (ECN) étant recopiée à partir d'un paquet reçu par le premier terminal client (HG1) ;
localiser le lieu de congestion ; et
déclencher des moyens d'inhibition (S ; P) de l'ouverture d'une seconde session de communication entre le serveur (S) et un second terminal client (HG2) situé dans une zone où la congestion a été localisée.

2. Dispositif selon la revendication 1, **caractérisé en ce que** l'information de congestion (ECN) est contenue dans un en-tête d'un paquet de données reçu du premier terminal client par le serveur (S).

3. Dispositif de commande selon la revendication 2, **caractérisé en ce qu'**il comprend des moyens d'identification d'une zone de congestion (DSLAM) à partir d'informations d'identification du premier terminal client contenues dans le paquet de données et **en ce que** les moyens d'inhibition sont aptes à inhiber une ouverture de session requise par un terminal client (HG2) situé dans ladite zone (DSLAM) identifiée.

4. Dispositif selon la revendication 1, **caractérisé en ce que** l'information de congestion (ECN) est relative à une congestion de paquets de données ayant une priorité (QoS1, QoS2) supérieure ou égale à la priorité de la session établie (QoS2).

5. Dispositif selon la revendication 1, **caractérisé en ce que** l'information de congestion (ECN) est contenue dans un message de réponse émis par le premier terminal client (HG1) vers le serveur (S).

6. Dispositif selon la revendication 5, **caractérisé en ce que** l'information de congestion (ECN) est contenue dans un accusé de réception (ACK) reçu du premier terminal client (HG1) en réponse aux données délivrées au premier terminal client (HG 1) par le serveur (S).

7. Procédé de commande de l'ouverture de sessions de communications entre un serveur (S) et des terminaux clients (HG1, HG2) reliés par un réseau de paquets de données, **caractérisé en ce que** ledit procédé comprend ;
une étape de détection, dans un paquet envoyé par un premier terminal client (HG1) au serveur (S), d'une information (ECN) de congestion d'une première session de communication établie entre le premier terminal client (HG1) et le serveur (S), ladite information de congestion (ECN) étant recopiée à partir d'un paquet reçu par le premier terminal client (HG1) ;
une étape de localisation du lieu de congestion ; et
une étape d'inhibition de l'ouverture d'une seconde session de communication entre le serveur (S) et un second terminal client (HG2) situé dans une zone où la congestion a été localisée.

8. Plateforme de service de données apte à gérer la délivrance de données à des terminaux clients (HG1, HG2) dans un réseau de paquets au moyen de sessions de communication avec lesdits terminaux clients, **caractérisé en ce qu'**elle comprend un dispositif de commande suivant l'une quelconque des revendications 1 à 6.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de commande de l'ouverture de sessions selon la revendication 7.

10. Support d'informations apte à coopérer avec un dispositif programmable et contenant des instructions aptes à mettre en œuvre le procédé de commande de l'ouverture de sessions selon la revendication 7 lorsqu'elles sont chargées et exécutées par le dispositif programmable.

## Patentansprüche

1. Steuervorrichtung (100) zur Anmeldung von Kommunikationssitzungen zwischen einem Server (S) und Client-Endgeräten (HG1, HG2), die durch ein Netz von Datenpaketen verbunden sind, **dadurch gekennzeichnet, dass** die Steuervorrichtung (100) konfiguriert ist, um:
in einem von einem ersten Client-Endgerät (HG1) an den Server (S) geschickten Paket eine Information der Überlastung (ECN) einer zwischen dem ersten Client-Endgerät (HG1) und dem Server (S) aufgebauten ersten Kommunikationssitzung zu erfassen, wobei die Überlastungsinformation (ECN) ausgehend von einem vom ersten Client-Endgerät (HG1) empfangenen Paket kopiert wird;
die Überlastungsstelle zu lokalisieren; und
Einrichtungen (S; P) zum Sperren der Anmeldung einer zweiten Kommunikationssitzung zwischen dem Server (S) und einem zweiten Client-Endgerät (HG2) auszulösen, das sich in einem Bereich befindet, in dem die Überlastung lokalisiert wurde.

2. Vorrichtung nach Anspruch 1, **dadurch gekennzeichnet, dass** die Überlastungsinformation (ECN) in einer Kopfzeile eines Datenpakets enthalten ist, das vom ersten Client-Endgerät durch das Server (S) empfangen wird.

3. Steuervorrichtung nach Anspruch 2, **dadurch gekennzeichnet, dass** sie Erkennungseinrichtungen eines Überlastungsbereichs (DSLAM) ausgehend von in dem Datenpaket enthaltenen Erkennungsinformationen des ersten Client-Endgeräts enthält, und dass die Sperreinrichtungen eine von einem in dem erkannten Bereich (DSLAM) befindlichen Client-Endgerät (HG2) geforderte Sitzungsanmeldung sperren können.

4. Vorrichtung nach Anspruch 1, **dadurch gekennzeichnet, dass** die Überlastungsinformation (ECN) sich auf eine Überlastung von Datenpaketen bezieht, die eine Priorität (QoS1, QoS2) höher als die oder gleich der Priorität der aufgebauten Sitzung (QoS2) haben.

5. Vorrichtung nach Anspruch 1, **dadurch gekennzeichnet, dass** die Überlastungsinformation (ECN) in einer Antwortnachricht enthalten ist, die vom ersten Client-Endgerät (HG1) an den Server (S) gesendet wird.

6. Vorrichtung nach Anspruch 5, **dadurch gekennzeichnet, dass** die Überlastungsinformation (ECN) in einer Empfangsbestätigung (ACK) enthalten ist, die vom ersten Client-Endgerät (HG1) als Antwort auf die vom Server (S) an das erste Client-Endgerät (HG1) gelieferten Daten empfangen wird.

7. Verfahren zur Steuerung der Anmeldung von Kommunikationssitzungen zwischen einem Server (S) und Client-Endgeräten (HG1, HG2), die durch ein Netz von Datenpaketen verbunden sind, **dadurch gekennzeichnet, dass** das Verfahren enthält:
einen Schritt der Erfassung, in einem von einem ersten Client-Endgerät (HG1) an den Server (S) geschickten Paket, einer Überlastungsinformation (ECN) einer zwischen dem ersten Client-Endgerät (HG1) und dem Server (S) aufgebauten ersten Kommunikationssitzung, wobei die Überlastungsinformation (ECN) ausgehend von einem vom ersten Client-Endgerät (HG1) empfangenen Paket kopiert wird;
einen Schritt der Lokalisierung der Überlastungsstelle; und
einen Schritt des Sperrens der Anmeldung einer zweiten Kommunikationssitzung zwischen dem Server (S) und einem zweiten Client-Endgerät (HG2), das sich in einem Bereich befindet, in dem die Überlastung lokalisiert wurde.

8. Datendienstplattform, die das Liefern von Daten an Client-Endgeräte (HG1, HG2) in einem Paketnetz mittels Kommunikationssitzungen mit den Client-Endgeräten verwalten kann, **dadurch gekennzeichnet, dass** sie eine Steuervorrichtung nach einem der Ansprüche 1 bis 6 enthält.

9. Computerprogrammprodukt, das von einem Kommunikationsnetz heruntergeladen und/oder auf einem computerlesbaren Träger gespeichert und/oder von einem Mikroprozessor ausgeführt werden kann, **dadurch gekennzeichnet, dass** es Programmcodeanweisungen zur Ausführung des Verfahrens zur Steuerung der Anmeldung von Sitzungen nach Anspruch 7 enthält.

10. Informationsträger, der mit einer programmierbaren Vorrichtung zusammenwirken kann und Anweisungen enthält, die das Steuerverfahren der Anmeldung von Sitzungen nach Anspruch 7 durchführen können, wenn sie von der programmierbaren Vorrichtung geladen und ausgeführt werden.

## Claims

1. Device (100) for controlling the opening of communication sessions between a server (S) and client terminals (HG1, HG2) that are connected by a data packet network, **characterized in that** the control device (100) is configured to:
detect, in a packet sent to the server (S) by a first client terminal (HG1), an item of congestion information (ECN) regarding a first communication session set up between the first client terminal (HG1) and the server (S), said item of congestion information (ECN) being copied from a packet received by the first client terminal (HG1);
locate the place of congestion; and
trigger inhibition means (S; P) for inhibiting the opening of a second communication session between the server (S) and a second client terminal (HG2) that is situated in a zone in which the congestion has been located.

2. Device according to Claim 1, **characterized in that** the item of congestion information (ECN) is contained in a header of a data packet received by the server (S) from the first client terminal.

3. Control device according to Claim 2, **characterized in that** it comprises means for identifying a congestion zone (DSLAM) on the basis of items of identification information for the first client terminal that are contained in the data packet, and **in that** the inhibition means are capable of inhibiting a session opening requested by a client terminal (HG2) that is situated in said identified zone (DSLAM).

4. Device according to Claim 1, **characterized in that** the item of congestion information (ECN) relates to data packet congestion affecting data packets that have a priority (QoSl, QoS2) higher than or equal to the priority of the session that has been set up (QoS2).

5. Device according to Claim 1, **characterized in that** the item of congestion information (ECN) is contained in a response message transmitted to the server (S) by the first client terminal (HG1).

6. Device according to Claim 5, **characterized in that** the item of congestion information (ECN) is contained in an acknowledgement of receipt (ACK) received from the first client terminal (HG1) in response to data delivered to the first client terminal (HG1) by the server (S).

7. Method for controlling the opening of communication sessions between a server (S) and client terminals (HG1, HG2) that are connected by a data packet network, **characterized in that** said method comprises:
a step of detecting, in a packet sent to the server (S) by a first client terminal (HG1), an item of congestion information (ECN) regarding a first communication session set up between the first client terminal (HG1) and the server (S), said item of congestion information (ECN) being copied from a packet received by the first client terminal (HG1);
a step of locating the place of congestion; and
a step of inhibiting the opening of a second communication session between the server (S) and a second client terminal (HG2) that is situated in a zone in which the congestion has been located.

8. Data service platform that is capable of managing the delivery of data to client terminals (HG1, HG2) in a packet network by means of communication sessions with said client terminals, **characterized in that** it comprises a control device according to any one of Claims 1 to 6.

9. Computer program product that is downloadable from a communication network and/or stored on a computer-readable medium and/or executable by a microprocessor, **characterized in that** it comprises program code instructions for executing the method for controlling the opening of sessions according to Claim 7.

10. Information storage medium that is capable of interacting with a programmable device and contains instructions capable of implementing the method for controlling the opening of sessions according to Claim 7 when said instructions are loaded and executed by the programmable device.
